# EUROPÄISCHE PATENTSCHRIFT

(11) **EP 1 261 810 B1**
(45) Veröffentlichungstag und Bekanntmachung des Hinweises auf die Patenterteilung: **16.06.2004**
(21) Anmeldenummer: 01907483.0
(22) Anmeldetag: 01.02.2001
(51) Int. Cl.: F16B 39/24

(54) **SCHEIBENFÖRMIGES SICHERUNGSELEMENT**
DISC-SHAPED SECURITY ELEMENT
ELEMENT DE SECURISATION EN FORME DE DISQUE

(30) Priorität: 01.03.2000 DE 10009719; 21.10.2000 DE 20018065 U
(43) Veröffentlichungstag der Anmeldung: 04.12.2002
(73) Patentinhaber: Pieper, Reinhold, 45721 Haltern (DE)
(72) Erfinder: Pieper, Reinhold, 45721 Haltern (DE)
(74) Vertreter: Gesthuysen, von Rohr & Eggert
(86) Internationale Anmeldenummer: PCT/EP2001/001045
(87) Internationale Veröffentlichungsnummer: WO 2001/065128

(56) Entgegenhaltungen:
- EP-A- 0 353 620
- EP-A- 0 461 941
- DE-A- 19 508 977
- DE-C- 4 208 356
- FR-A- 2 580 744

## Beschreibung

Die vorliegende Erfindung betrifft ein scheibenförmiges Sicherungselement gemäß dem Oberbegriff des Anspruchs 1.

Das Sicherungselement wirkt einem unbeabsichtigten Lösen oder Lockerwerden einer Schraubverbindung o. dgl. entgegen. Hierzu wird das scheibenförmige Sicherungselement üblicherweise zwischen einer Mutter oder einem Schraubenkopf der Schraubverbindung einerseits und einem Werkstück o. dgl. andererseits beim Anziehen der Schraubverbindung eingeklemmt.

Im Einbauzustand wirkt das Sicherungselement durch Erhöhung der Reibungskräfte zwischen der Mutter bzw. dem Schraubenkopf und dem zugeordneten Werkstück einem ungewollten Verdrehen der Mutter bzw. des Schraubenkopfes und damit einem ungewollten Lösen der Schraubverbindung entgegen. Weiter verhindert das Sicherungselement durch eine üblicherweise vorgesehene Eigenelastizität in axialer Richtung ein übermäßiges Lockern und damit Lösen der Schraubverbindung bei Verformung der Schraube und/oder des Werkstücks in axialer Richtung der Schraubverbindung.

Eine gebräuchliche Ausführungsform eines scheibenförmigen Sicherungselements liegt mit einer sogenannten Zahnscheibe vor, beispielsweise gemäß DIN 6797 oder 6798, die als flacher Metallring mit zahnförmigen axialen Vorsprüngen üblicherweise aus Federstahl ausgeführt ist. Insbesondere stehen die Vorsprünge auf beiden Seiten axial gegenüber dem flachen Ring vor.

Beim Anziehen der Verschraubung pressen die Mutter bzw. der Schraubenkopf einerseits und das Werkstück andererseits die Vorsprünge zusammen, wobei je nach Anzugsmoment bzw. Druckkraft die Auflageflächen den flachen Ring der Zahnscheibe berühren. Die Vorsprünge weisen Kanten auf, die beim Zusammendrücken der Zahnscheibe wie Schneiden in die Oberflächen der Auflageflächen eindringen und zu einem sehr hohen Reibschluß oder gar Formschluß gegen Verdrehen bei geeigneten Oberflächenhärten der verwendeten Bauteile führen können. Um eine optimale Sicherungswirkung zu erreichen, ist ein verhältnismäßig starkes Zusammendrücken und dementsprechend ein verhältnismäßig hohes Anzugsmoment erforderlich.

Ähnliches gilt für metallische Federringe, beispielsweise gemäß DIN 127, u. dgl. aus Metall.

Ein weiterer Nachteil der metallischen Sicherungselemente liegt darin, daß ein gewolltes Lösen oder Nachziehen der Schraubverbindung durch Korrosion erschwert sein kann.

Weiterhin sind scheibenförmige Schraubensicherungen in Form von flachen Kunststoffringen bzw. -scheiben, beispielsweise aus Polyamid, bekannt. Beim Zusammendrücken zwischen vergleichsweise harten Auflageflächen einer Mutter oder eines Schraubenkopfs und eines Werkstücks kann sich der Kunststoff den Unebenheiten der Auflageflächen anpassen und ggf. nach außen gedrückt werden, um sich um Außenflächen der Mutter bzw. des Schraubenkopfs zu legen. Letzteres führt bei Verwendung von Muttern oder Schrauben mit einem Außenmehrkant zu einer zusätzlichen Sicherungswirkung.

Ferner bietet die Elastizität des Kunststoffs eine Toleranz der Sicherung gegenüber dem Nachgeben anderer Teile der Verbindung. Darüber hinaus kann ein scheibenförmiges Sicherungselement aus Kunststoff derart ausgebildet sein, daß die Kunststoffmasse bei Deformation des Sicherungselements den gesamten zur Verfügung stehenden Spalt ausfüllt, wodurch die Schraubverbindungen abgedichtet und damit vor Korrosion geschützt wird.

Ein Nachteil einer derartigen Sicherung liegt darin, daß nur verhältnismäßig geringe Druckkräfte bzw. Anzugmomente aufgenommen werden können, da durch die hohen Vorspannkräfte einer hochfesten Schraubverbindung, beispielsweise bei Festigkeitsklassen ab 8.8, der Kunststoffring ggf. vollständig aus dem Spalt herausgepreßt wird oder reißt.

Aus der Praxis ist es auch bekannt, ein metallisches Sicherungselement mit einem Sicherungselement aus Kunststoff zu kombinieren, also beide Teile übereinanderzulegen und bei einer Schraubverbindung einzusetzen. Dies erfordert jedoch eine optimale Anpassung der Sicherungselemente zueinander. Bei der Montage besteht das Risiko, daß nicht optimal angepaßte Sicherungselemente miteinander kombiniert werden, mit der Gefahr, daß nur eine unzureichende Sicherungswirkung erreicht wird. Weiterhin ist hier nachteilig, daß zur Sicherung einer Schraubverbindung jeweils zwei Sicherungselemente vorrätig gehalten und montiert werden müssen, daß eine oft nur geringe Dichtungswirkung erreichbar ist und daß meistens Korrosion auftritt.

Die EP 0 353 620 A1, die den Ausgangspunkt der vorliegenden Erfindung bildet, offenbart ein Sicherungsteil in der Art eines Federrings mit einer Vielzahl von axialen Vorsprüngen. Nachteilig ist, daß dieser Federring keine Dichtwirkung und keinen Schutz gegen Korrosion aufweist.

Die FR 2 580 844 A1 offenbart ein Zwischenlagelement, insbesondere in Form einer Zwischenlagscheibe, aus PTFE, beschichtet mit Teflon.

Der vorliegenden Erfindung liegt die Aufgabe zugrunde, ein Sicherungselement für eine Schraubverbindung o. dgl. anzugeben, das die Nachteile des Standes der Technik vermeidet und bei einfacher Handhabung universell einsetzbar ist, insbesondere für Schraubverbindungen sehr unterschiedlicher Festigkeitsklassen.

Die obige Aufgabe wird durch ein Sicherungselement gemäß Anspruch 1 gelöst. Vorteilhafte Weiterbildungen sind Gegenstand der Unteransprüche.

Eine grundlegende Idee der vorliegenden Erfindung liegt darin, ein insbesondere metallisches Sicherungsteil in Form einer Zahnscheibe oder eines Federrings mit einer Kunststoffmasse zur Bildung eines einstückigen Sicherungselements zu versehen.

Das vorschlagsgemäße Sicherungselement bietet gegenüber den bekannten Ausführungsformen verschiedene Vorteile.

Zunächst kann das scheibenförmige Sicherungselement natürlich nach wie vor als einteiliges (einstückiges) Bauteil gelagert und montiert werden, was insbesondere für automatische Fertigungen wichtig ist, obwohl das vorschlagsgemäße Sicherungselement die günstigen Eigenschaften zweier Materialien und verschiedener Festigkeitsklassen bzw. -bereiche für Schraubverbindungen umfaßt.

Bedarfsweise kann das vorschlagsgemäße Sicherungselement mehrfach verwendet werden, da der Kunststoff eine Korrosion des insbesondere metallischen Sicherungsteils verhindert.

Vorzugsweise füllt das Sicherungselement den Spalt bei einer Schraubverbindung zwischen einer Mutter bzw. einem Schraubenkopf einerseits und einem gegenüberliegenden Werkstück andererseits weitestgehend oder vollständig dichtend aus. Insbesondere verhindert das Sicherungselement auch ein Eindringen von Flüssigkeiten in die Schraubverbindung, so daß auch einer Korrosion der Schraubverbindung entgegenwirkt und dadurch ein definiertes Lösen bei Bedarf ermöglicht wird.

Bei metallischer Ausführung des Sicherungsteils kann trotz der elektrisch isolierenden Kunststoffmasse auch eine elektrische Verbindung zwischen Werkstück und Schraubverbindung bzw. Mutter oder Schraubenkopf erreicht werden.

Ein ganz besonderer Vorteil liegt darin, daß das Sicherungselement in bezug auf die auftretenden Druckkräfte bzw. Vorspannkräfte einer Schraubverbindung universell einsetzbar ist. Das Sicherungselement erfüllt seine Aufgabe also gleichermaßen für kleine Kräfte, wobei die Wirkungsweise hier der einer bekannten Kunststoffscheibe vergleichbar ist, wie auch für hohe Kräfte bzw. bei hohen Anzugsmomenten, wobei dann die gewünschte Wirkung auf das vorzugsweise aus Federstahl hergestellte Sicherungsteil zurückzuführen ist, beispielsweise vergleichbar einer bekannten Zahnscheibe.

Weitere Aspekte, Vorteile, Eigenschaften und Merkmale der vorliegenden Erfindung werden nachfolgend anhand der Zeichnung bevorzugter Ausfiihrungsformen näher erläutert. Es zeigt:
- Fig. 1: eine schematische Schnittansicht einer Schraubverbindung mit einem vorschlagsgemäßen Sicherungselement;
- Fig. 2: einen schematischen, radialen Schnitt eines vorschlagsgemäßen Sicherungselements gemäß einer ersten Ausführungsform;
- Fig. 3: eine Draufsicht eines Sicherungsteils des Sicherungselements;
- Fig. 4: eine Seitenansicht des Sicherungsteils gemäß Fig. 3;
- Fig. 5: eine Draufsicht eines anderen Sicherungsteils;
- Fig. 6: eine Draufsicht eines weiteren Sicherungsteils;
- Fig. 7: eine Seitenansicht des Sicherungsteils gemäß Fig. 6;
- Fig. 8: einen schematischen, radialen Schnitt eines vorschlagsgemäßen Sicherungselements gemäß einer zweiten Ausführungsform; und
- Fig. 9: eine ausschnittsweise, vergrößerte Schnittansicht einer Schraubverbindung mit einem vorschlagsgemäßen Sicherungselement.

Nachfolgend werden für gleiche oder ähnliche Teile dieselben Bezugszeichen verwendet. Es ergeben sich ähnliche oder gleiche Vorteile, auch wenn eine wiederholte Beschreibung weggelassen wird.

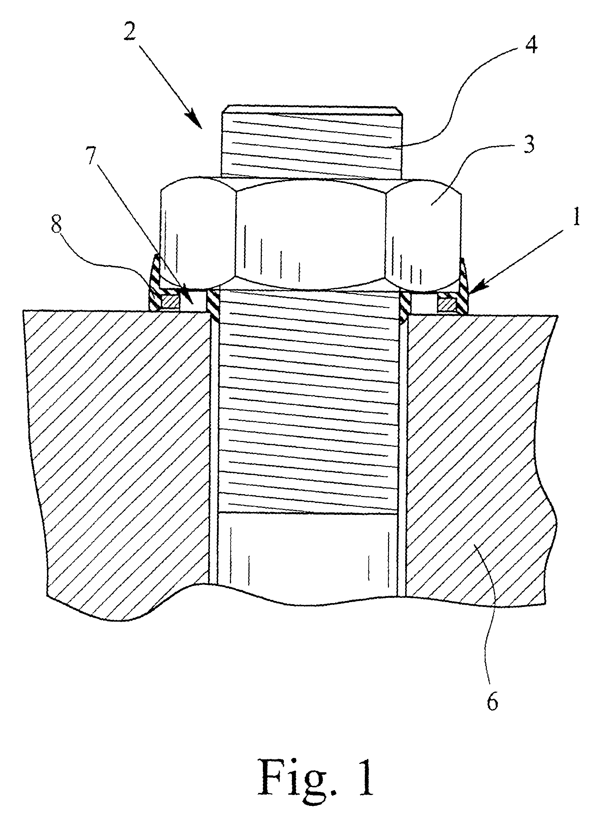

Die schematische Schnittdarstellung gemäß Fig. 1 zeigt ein vorschlagsgemäßes Sicherungselement 1 zur Sicherung einer Schraubverbindung 2 gegen Lockerung bzw. ungewolltes Lösen. Das Sicherungselement 1 kann beispielsweise aber auch bei einer sonstigen Verbindung, wie einer Nietverbindung o. dgl., Verwendung finden, insbesondere wenn die Verbindung gegen ein ungewolltes Verdrehen und/oder abgedichtet, insbesondere gegen Eindringen von Flüssigkeiten geschützt werden soll.

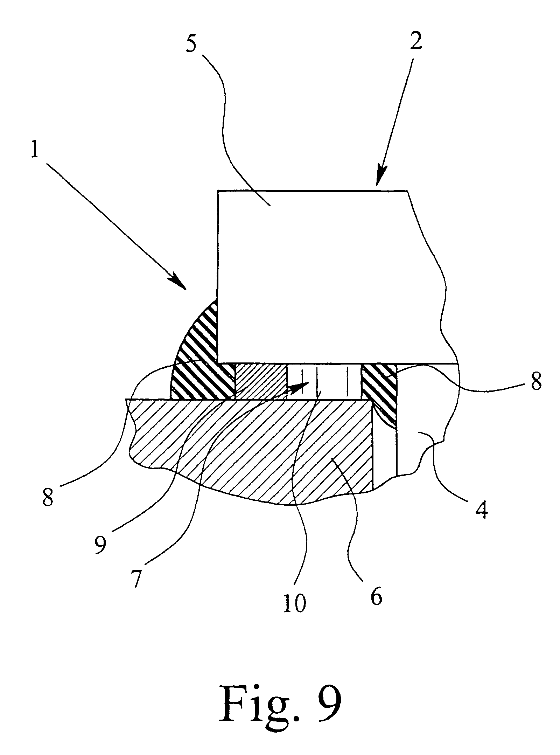

Die in Fig. 1 dargestellte Schraubverbindung 2 weist eine Mutter 3 und einen zugeordneten Gewindebolzen bzw. eine zugeordnete Schraube 4 auf. Bei der alternativen Ausführungsfbrm gemäß Fig. 9 ist ein Schraubenkopf 5 der Schraube 4 angedeutet.

Bei den Darstellungsbeispielen ist das Sicherungselement zwischen der Mutter 3 oder dem Schraubenkopf 5 einerseits und einem der Schraubverbindung 2 zugeordneten Werkstück 6 o. dgl. andererseits angeordnet und bei angezogener Schraubverbindung 2 eingeklemmt. Das Sicherungselement 1 dient dabei jeweils einer Sicherung der Schraubverbindung 2 gegen Lockern und ungewolltes Lösen der Schraubverbindung 2.

Selbstverständlich können auch mehrere Werkstücke 6 oder sonstige Bauteile, Komponenten u. dgl., die hier aus Vereinfachungsgründen nicht dargestellt sind, mittels der Schraubverbindung 2 verbunden sein. Insbesondere kann das vorschlagsgemäße Sicherungselement 1 bedarfsweise auch auf beiden Seiten der Schraubverbindung 2, also einerseits bei der Mutter 3 und andererseits beim Schraubenkopf 5, angeordnet sein bzw. Verwendung finden.

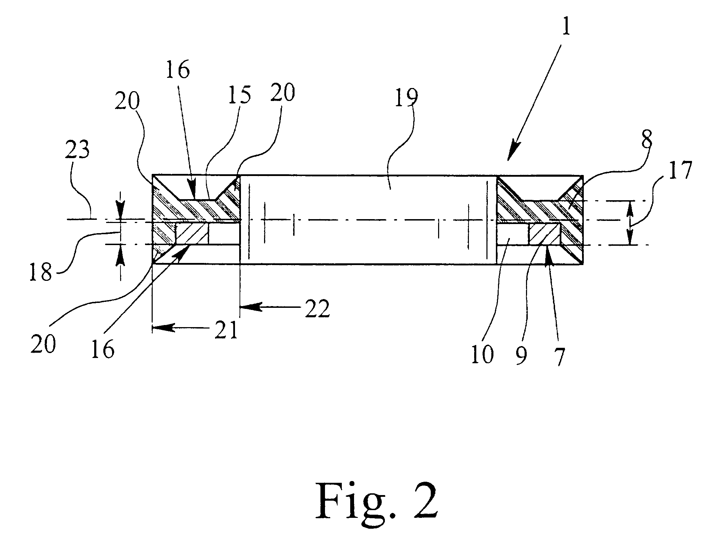

Das vorschlagsgemäße Sicherungselement 1 weist, wie der schematischen Schnittdarstellung gemäß Fig. 2 zu entnehmen ist, ein vorzugsweise metallisches Sicherungsteil 7 auf, das zumindest teilweise, hier zumindest im wesentlichen vollständig von einer Kunststoffmasse 8 umgeben bzw. umhüllt ist. Das Sicherungselement 1 ist einstückig ausgebildet.

Das Sicherungsteil 7 ist aus einem Material hoher Festigkeit hergestellt, vorzugsweise aus Metall bzw. Stahl, insbesondere aus Federstahl. Vorzugsweise beträgt die Zug- bzw. Zeitstandfestigkeit Rₘ mindestens 500 N/mm², insbesondere mindestens 800 N/mm².

Das Sicherungsteil 7 kann jedoch auch aus einem geeigneten Kunststoff oder Verbundmaterial hergestellt sein, wobei das Material des Sicherungsteils 7 vorzugsweise fester als die Kunststoffmasse 8 ist.

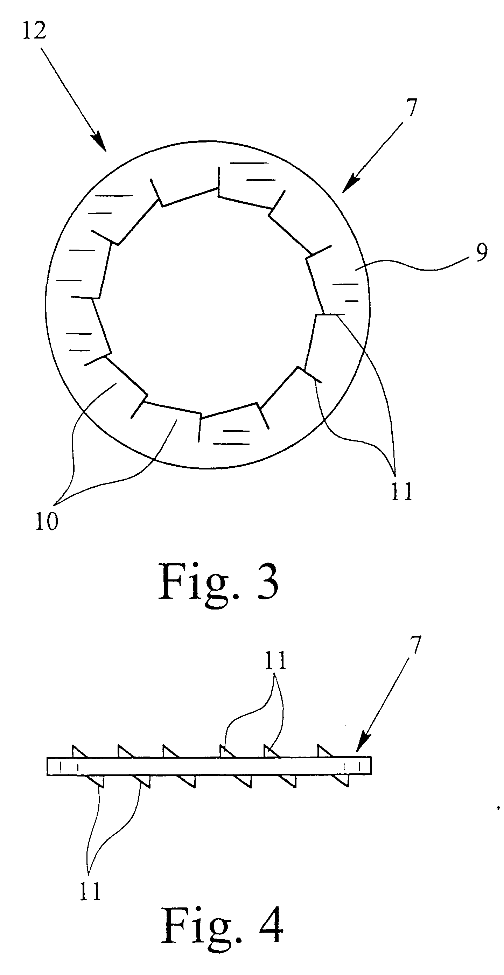

Das Sicherungsteil 7 ist vorzugsweise als geschlossener Ring ausgebildet und weist einen geschlossenen Ringabschnitt 9 auf, wie in Fig. 2 und 3 schematisch angedeutet. Bei diesem Ausführungsbeispiel weist das Sicherungsteil 7 radial, hier nach innen vorspringende Abschnitte 10 auf, die insbesondere durch Verdrehen axiale Vorsprünge 11 o. dgl. bilden, wie in der Seitenansicht gemäß Fig. 4 angedeutet. Das Sicherungsteil 7 ist hier insbesondere als Zahnscheibe 12 gemäß DIN 6797 oder 6798 ausgebildet.

Vorzugsweise ist die Zahnscheibe 12 bzw. das Sicherungsteil 7 innen gezahnt ausgebildet, der Ringabschnitt 9 ist also vorzugsweise radial außenliegend angeordnet. Hierdurch wird ein unerwünschtes radiales Ausweichen der Kunststoffmasse 8 beim Zusammendrücken des Sicherungselements 1 verhindert.

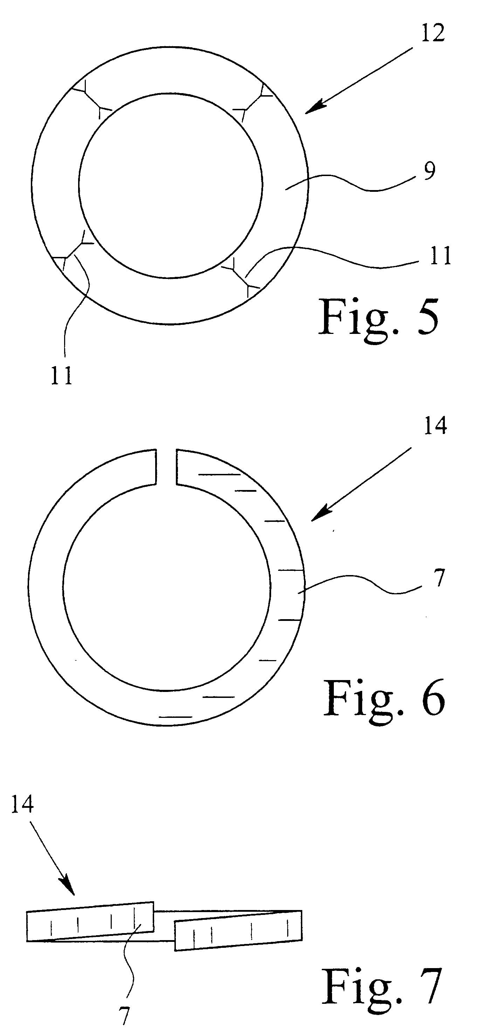

Fig. 5 zeigt eine andere Ausführungsvariante der Zahnscheibe 12 mit auf einer Flachseite, vorzugsweise beiden Flachseiten, des Ringabschnitts 9 angeordneten bzw. aufgesetzten Zähnen bzw. Vorsprüngen 11.

Das Sicherungsteil 7 kann jedoch auch eine andere Form aufweisen.

Eine andere Ausführungsform des Sicherungsteils 7 zeigen die Draufsicht gemäß Fig. 6 und die Seitenansicht gemäß Fig. 7. Das Sicherungsteil 7 ist hier als sogenannter Federring 14, insbesondere gemäß DIN 127, ausgebildet.

Die Kunststoffmasse 8 ist vorzugsweise aus Polyamid, Polytetraflourethylen oder einem vergleichbaren Werkstoff hergestellt. Insbesondere ist die Kunststoffmasse 8 zähelastisch und weist ein geringeres Elastizitätsmodul, also eine niedrigere Fließgrenze, als das Sicherungsteil 7 bzw. dessen Material auf.

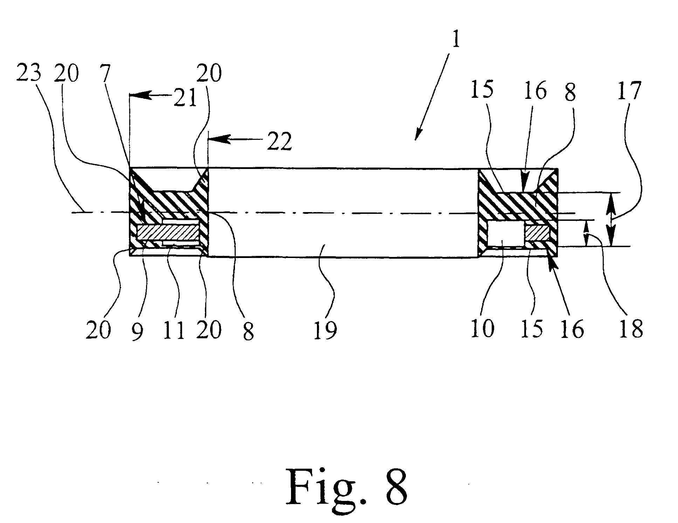

Fig. 8 zeigt in einer schematischen Schnittdarstellung eine andere bzw. etwas modifizierte Ausführungsform des vorschlagsgemäßen Sicherungselements 1.

Das Sicherungsteil 7 ist vorzugsweise im Bereich einer Oberfläche 15 der Kunststoffmasse 8 bzw. einer Flachseite 16 des Sicherungselements 1 angeordnet. Im Falle der Ausbildung des Sicherungsteils 7 als Zahnscheibe 12 bzw. mit axial vorragenden Vorsprüngen 11 kann das Sicherungsteil 7 entweder vollständig, also auch mit seinen außenliegenden Vorsprüngen 11, von der Kunststoffmasse 8 überdeckt bzw. ummantelt sein, wie bei der Ausführungsform gemäß Fig. 8, oder teilweise aus der Kunststoffmasse 8, insbesondere mit den nach außen weisenden Vorsprüngen 11, vorragen, wie bei der Ausführungsform gemäß Fig. 2 zu erwarten ist. Vorzugsweise sind jeweils die Verzahnung des Sicherungsteils 7 bzw. die Zwischenräume der radialen Abschnitte 10 und der Vorsprünge 11 durch die Kunststoffmasse 8 zumindest weitgehend ausgefüllt.

Die axiale Dicke 17 des Sicherungselements 1 ist vorzugsweise mindestens etwa doppelt so groß wie die axiale Dicke 18 des Sicherungsteils 7, wie in Fig. 2 und 8 angedeutet.

Das Sicherungselement 1 ist als geschlossener Ring mit einer zentralen, durchgehenden Ausnehmung 19 ausgebildet. Jedoch sind auch hiervon abweichende Formen möglich.

Vorzugsweise weist das Sicherungselement 1 auf seinen Flachseiten 16 mindestens einen umlaufenden Ringsteg 20 auf. Vorzugsweise ist ein Ringsteg 20 jeweils sowohl auf beiden Flachseiten 16 als auch im Bereich eines Außenumfangs 21 und eines Innenumfangs 22 des Sicherungselements 1 vorgesehen. Die Ringstege 20 sind durch die Kunststoffmasse 8 gebildet und weisen eine vorzugsweise zumindest im wesentlichen keilförmige Querschnitts form auf, wie in Fig. 2 und 8 angedeutet.

Gegebenenfalls kann das Sicherungselement 1 punktsymmetrisch, also spiegelsymmetrisch bezüglich seiner Hauptebene 23 ausgebildet sein. Dies erleichtert den Einbau, da nicht darauf geachtet werden muß, welche Flachseite 16 zum Werkstück 6 o. dgl. weist.

Gemäß den dargestellten Ausführungsbeispielen ist das Sicherungselement 1 jedoch asymmetrisch bezüglich der Hauptebene 23 ausgebildet, also auch bezüglich seiner Außenkontur und nicht nur bezüglich der asymmetrischen Anordnung des Sicherungsteils 7 in der Kunststoffmasse 8. Insbesondere sind nämlich die Ringstege 20 auf der dem Sicherungsteil 7 benachbarten Flachseite 16 kleiner als die Ringstege 20 auf der anderen Flachseite 16 ausgebildet. Dies führt zu optimalen Einbau- und Sicherungseigenschaften, wie nachfolgend unter Bezugnahme auf Fig. 9 näher erläutert.

Beim axialen Zusammendrücken bzw. Zusammenquetschen des vorschlagsgemäßen Sicherungselements 1 zwischen einerseits dem Schraubenkopf 5, der Mutter 3 o. dgl. und andererseits einem Widerlager, wie dem Werkstück 6 o. dgl., wird je nach einwirkender Kraft die Kunststoffmasse 8 einerseits radial nach innen und andererseits radial nach außen verdrängt, wobei insbesondere die Ringstege 20 einer guten Abdichtung, insbesondere gegen das Eindringen von Flüssigkeit, Feuchtigkeit o. dgl., zuträglich sind. Die Ringstege 20 liegen hier ggf. linienartig mit entsprechend großem Druck und guter Abdichtwirkung an.

Bei entsprechender Anzugskraft bzw. Festigkeitsklasse der Schraubverbindung 2 kommt das Sicherungsteil 7 auf beiden Flachseiten 16 unter Verdrängung der Kunststoffmasse 8 unmittelbar mit dem Schraubenkopf 5 bzw. der Mutter 3 und dem Werkstück 6 in Kontakt. So wird eine metallische, ggf. elektrisch leitende Verbindung und Sicherung hergestellt. Hierbei ist ein wesentlicher Vorteil, daß ein optimaler Schutz des Sicherungsteils 7 vor Korrosion durch die Kunststoffmasse 8 ermöglicht wird. Dementsprechend ist beispielsweise ein Festrosten, Anfressen o. dgl. ausgeschlossen. Vielmehr kann die Schraubverbindung 2 bei Bedarf wieder mit einem definierten und nicht unvorhergesehen hohen Moment gelöst werden.

Die Abdichtung durch das Sicherungselement 1 verhindert weiter eine Korrosion des Gewindes bzw. im Inneren der Schraubverbindung 2, so daß auch diesbezüglich ein Festrosten, Anfressen o. dgl. verhindert werden kann.

In Fig. 1 und 9 ist angedeutet, daß sich die Kunststoffmasse 8 im eingebauten Zustand insbesondere innen in den Gewindebereich der Schraubverbindung 2 hineindrückt und insbesondere sich radial von außen an den Außenumfang des Schraubenkopfs 5 bzw. der Mutter 3 anlegt und dementsprechend sichernd wirkt.

Bei einer herkömmlichen Kunststoffsicherung besteht das Risiko, daß zu hohe Anzugskräfte zu einer Zerstörung der Sicherung führen, wobei die Kunststoffsicherung ggf. zu stark radial nach außen herausgedrückt wird. Diese Gefahr besteht bei dem vorschlagsgemäßen Sicherungselement 1 nicht. Vielmehr kommen bei starkem bzw. zu starkem Anziehen der Schraubverbindung 2 die zusammendrückenden Flächen am Sicherungsteil 7 bzw. auf dessen Ringabschnitt 9 zu liegen, wie in Fig. 9 angedeutet, so daß eine Überlastung des Sicherungselements 1 bzw. ein ungewolltes übermäßiges Herausdrücken der Kunststoffmasse 8 ausgeschlossen ist.

## Patentansprüche

1. Scheibenförmiges Sicherungselement (1) zur Sicherung einer Schraubverbindung (2) gegen Lockerung und/oder Lösen, mit einem Sicherungsteil (7), das als Zahnscheibe (12) oder als Federring (14) ausgebildet ist,
**dadurch gekennzeichnet,**
**daß** das Sicherungsteil (7) zumindest teilweise von einer Kunststoffmasse (8) unter Bildung eines einstückigen Sicherungselements (1) umgeben ist, wobei
das Sicherungsteil (7) als geschlossener Ring mit einem radial außen liegenden Ringabschnitt (9) und innen gezahnt ausgebildet ist, um ein unerwünschtes radiales Ausweichen von Kunststoffmasse (8) beim Zusammendrücken des Sicherungselements (1) zu verhindern, und/oder
das Sicherungselement (1) auf einer Flachseite (16) zwei axial vorspringende Ringstege (20) aufweist, von denen sich einer am Außenumfang (21) und der andere am Innenumfang (22) des Sicherungselements (1) befindet.

2. Sicherungselement nach Anspruch 1, **dadurch gekennzeichnet, daß** das Sicherungsteil (7) elastisch verformbar und/oder federelastisch ausgebildet ist und/oder aus einem Material hoher Festigkeit, vorzugsweise aus Metall, insbesondere aus federhartem Stahl, besteht.

3. Sicherungselement nach Anspruch 1 oder 2, **dadurch gekennzeichnet, daß** das Sicherungsteil (7) radial, insbesondere nach innen, vorspringende Abschnitte (10) und/oder axial abstehende bzw. wirkende Vorsprünge (11) aufweist, insbesondere wobei die Vorsprünge (11) durch radial vorspringende, verdrehte Abschnitte (10) des Sicherungsteils (7) gebildet sind.

4. Sicherungselement nach einem der voranstehenden Ansprüche, **dadurch gekennzeichnet, daß** das Sicherungsteil (7) als Zahnscheibe (12) gemäß DIN 6797 oder 6798 oder als Federring (14) gemäß DIN 127 ausgebildet ist und/oder daß die Dicke (17) des Sicherungselements (1) zumindest im wesentlichen doppelt so groß wie die Dicke (18) des Sicherungsteils (7) ist.

5. Sicherungselement nach einem der voranstehenden Ansprüche, **dadurch gekennzeichnet, daß** die Kunststoffmasse (8) elastisch, zähelastisch und/oder plastisch verformbar und/oder weicher als das Sicherungsteil (7) bzw. dessen Material ist, insbesondere einen kleineren Elastizitätsmodul und/oder eine niedrigere Fließgrenze aufweist.

6. Sicherungselement nach einem der voranstehenden Ansprüche, **dadurch gekennzeichnet, daß** die Kunststoffmasse (8) ein Polyamid, Polytetrafluorethylen oder ein vergleichbarer Werkstoff ist und/oder daß die Kunststoffmasse (8) das Sicherungsteil (7) zumindest im wesentlichen vollständig umgibt und/oder überdeckt.

7. Sicherungselement nach einem der voranstehenden Ansprüche, **dadurch gekennzeichnet, daß** das Sicherungsteil (7) oder zumindest davon abstehende Vorsprünge (11) in einer Oberfläche (15) der Kunststoffmasse (8) und/oder an einer Flachseite (16) des Sicherungselements (1) liegen.

8. Sicherungselement nach einem der voranstehenden Ansprüche, **dadurch gekennzeichnet, daß** das Sicherungselement (1) ringförmig mit einer durchgehenden Ausnehmung (19) ausgebildet ist und/oder zumindest im wesentlichen glatte Flachseiten (16) aufweist.

9. Sicherungselement nach einem der voranstehenden Ansprüche, **dadurch gekennzeichnet, daß** das Sicherungselement (1) auf beiden Flachseiten (16) jeweils zwei vorzugsweise keilförmige Ringstege (20) aufweist, von denen sich einer am Außenumfang (21) und der andere am Innenumfang (22) des Sicherungselements (1) befindet.

10. Sicherungselement nach einem der voranstehenden Ansprüche, **dadurch gekennzeichnet, daß** das Sicherungselement (1) zumindest im wesentlichen punktsymmetrisch ausgebildet ist oder daß das Sicherungselement (1) oder dessen Außenkontur asymmetrisch bezüglich seiner Hauptebene (23) ausgebildet ist.

## Claims

1. Disc-shaped locking element (1) for locking a screwed connection (2) against slackening and/or release, having a locking part (7) which is designed as a toothed lock washer (12) or as a spring lock washer (14), **characterized in that** the locking part (7) is at least partly surrounded by a plastic compound (8), with a one-piece locking element (1) being formed, the locking part (7) being designed as a closed ring, having a radially outer ring section (9), and being of internally toothed design in order to prevent an undesirable radial escape of plastic compound (8) when the locking element (1) is being compressed, and/or the locking element (1), on a flat side (16), having two axially projecting annular webs (20), of which one is located at the outer circumference (21) and the other is located at the inner circumference (22) of the locking element (1).

2. Locking element according to Claim 1, **characterized in that** the locking part (7) is elastically deformable and/or is of elastic design and/or is made of a material of high strength, preferably of metal, in particular of spring-hard steel.

3. Locking element according to Claim 1 or 2, **characterized in that** the locking part (7) has radially, in particular inwardly, projecting sections (10) and/or axially protruding or acting projections (11), the projections (11) in particular being formed by radially projecting, twisted sections (10) of the locking part (7).

4. Locking element according to one of the preceding claims, **characterized in that** the locking part (7) is designed as a toothed lock washer (12) according to DIN 6797 or 6.798 or as a spring lock washer (14) according to DIN 127, and/or **in that** the thickness (17) of the locking element (1) is at least essentially twice as large as the thickness (18) of the locking part (7).

5. Locking element according to one of the preceding claims, **characterized in that** the plastic compound (8) is deformable in an elastic, viscoplastic and/or plastic manner and/or is softer than the locking part (7) or its material and in particular has a smaller modulus of elasticity and/or a lower yield point.

6. Locking element according to one of the preceding claims, **characterized in that** the plastic compound (8) is a polyamide, polytetrafluoroethylene or a comparable material, and/or **in that** the plastic compound (8) at least essentially completely surrounds and/or covers the locking part (7).

7. Locking element according to one of the preceding claims, **characterized in that** the locking part (7) or at least projections (11) protruding therefrom lie in a surface (15) of the plastic compound (8) and/or at a flat side (16) of the locking element (1).

8. Locking element according to one of the preceding claims, **characterized in that** the locking element (1) is of annular design with a continuous aperture (19) and/or has at least essentially smooth flat sides (16).

9. Locking element according to one of the preceding claims, **characterized in that**, on both flat sides (16), the locking element (1) in each case has two preferably wedge-shaped annular webs (20), of which one is located at the outer circumference (21) and the other is located at the inner circumference (22) of the locking element (1).

10. Locking element according to one of the preceding claims, **characterized in that** the locking element (1) is designed to be at least essentially centrosymmetric, or **in that** the locking element (1) or its outer contour is designed to be asymmetric relative to its main plane (23).

## Revendications

1. Élément de fixation (1) en forme de disque pour la fixation d'une liaison à visser (2) contre le desserrage et/ou contre la disjonction, comprenant une partie de fixation (7) qui est réalisé sous la forme d'une rondelle à face dentée (12) ou sous la forme d'une rondelle élastique (14), **caractérisé en ce que** la partie de fixation (7) est entourée, au moins en partie, d'une matière synthétique (8) pour former un élément de fixation (1) en une seule pièce, la partie de fixation (7) étant réalisée sous la forme d'un anneau fermé possédant une section annulaire (9) disposée à l'extérieur en direction radiale, tout en présentant une denture interne, pour empêcher un échappement radial non désiré de la matière synthétique (8) lors de la compression de la partie de fixation (1), et/ou l'élément de fixation (1) présente, sur un côté plat (16), deux nervures annulaires (20) faisant saillie en direction axiale, l'une se trouvant sur la périphérie externe (21) et l'autre se trouvant sur la périphérie interne (22) de l'élément de fixation (1).

2. Élément de fixation selon la revendication 1, **caractérisé en ce que** la partie de fixation (7) manifeste une aptitude à la déformation élastique et/ou est réalisée de façon à présenter une élasticité analogue à celle d'un ressort et/ou est constitué d'un matériau à résistance élevée, de préférence en métal, en particulier en acier dur élastique.

3. Élément de fixation selon la revendication 1 ou 2, **caractérisé en ce que** la partie de fixation (7) présente des sections (10) faisant saillie en direction radiale, en particulier vers l'intérieur et/ou des saillies (11) s'écartant, respectivement agissant en direction axiale, en particulier dans lequel les saillies (11) sont formées par des sections (10) de la partie de fixation (7), soumises à une torsion et faisant saillie en direction radiale.

4. Élément de fixation selon l'une quelconque des revendications précédentes, **caractérisé en ce que** la partie de fixation (7) est réalisée sous la forme d'une rondelle à face dentée (12) conformément à la norme DIN 6797 ou 6798 ou sous la forme d'une rondelle élastique (14) selon la norme DIN 127 et/ou **en ce que** l'épaisseur (17) de l'élément de fixation (1) représente au moins de manière essentielle le double de l'épaisseur (18) de la partie de fixation (7).

5. Élément de fixation selon l'une quelconque des revendications précédentes, **caractérisé en ce que** la matière synthétique (8) manifeste une aptitude à la déformation élastique, à la déformation viscoélastique et/ou à la déformation plastique et/ou est plus tendre que la partie de fixation (7), respectivement que la matière de ce dernier, en particulier présente un module d'élasticité inférieur et/ou une limite d'écoulement inférieure.

6. Élément de fixation selon l'une quelconque des revendications précédentes, **caractérisé en ce que** la matière synthétique (8) est un polyamide, un polytétrafluoréthylène ou un matériau comparable et/ou **en ce que** la matière synthétique (8) entoure au moins essentiellement de manière complète et/ou recouvre la partie de fixation (7).

7. Élément de fixation selon l'une quelconque des revendications précédentes, **caractérisé en ce que** la partie de fixation (7) ou au moins des saillies (11) s'écartant de cette dernière est/sont disposées dans une surface (15) de la matière synthétique (8) et/ou sur un côté plat (16) de l'élément de fixation (1).

8. Élément de fixation selon l'une quelconque des revendications précédentes, **caractérisé en ce que** l'élément de fixation (1) est réalisé sous une forme annulaire avec un évidement traversant (19) et/ou présente des côtés plats au moins essentiellement lisses.

9. Élément de fixation selon l'une quelconque des revendications précédentes, **caractérisé en ce que** l'élément de fixation (1) présente, sur les deux côtés plats (16), respectivement deux nervures annulaires (20), de préférence cunéiformes, l'une se trouvant sur la périphérie externe (21) et l'autre se trouvant sur la périphérie interne (22) de l'élément de fixation (1).

10. Élément de fixation selon l'une quelconque des revendications précédentes, **caractérisé en ce que** l'élément de fixation (1) est réalisé, au moins de manière essentielle, en symétrie ponctuelle ou **en ce que** l'élément de fixation (1) ou son contour externe sont réalisés en asymétrie par rapport à son plan principal (23).
